# EUROPEAN PATENT SPECIFICATION

(11) **EP 2 417 295 B1**
(45) Date of publication and mention of the grant of the patent: **21.11.2012**
(21) Application number: 10727452.4
(22) Date of filing: 25.03.2010
(51) Int. Cl.: D21F 7/06, D21G 3/00, D21G 9/00

(54) **BEAM STRUCTURE**
BALKENKONSTRUKTION
STRUCTURE DE POUTRE

(30) Priority: 09.04.2009 FI 20095403
(43) Date of publication of application: 15.02.2012
(73) Proprietor: Procemex Oy, 40101 Jyväskylä (FI)
(72) Inventor: LYYRA, Jorma, FI-70150 Kuopio (FI)
(74) Representative: Palmgren, Eero Juhani
(86) International application number: PCT/FI2010/050238
(87) International publication number: WO 2010/116027

(56) References cited:
- EP-A2- 2 113 608
- DE-A1- 19 951 041
- DE-A1-102005 049 525
- DE-C1- 4 141 133

## Description

### Field of the invention

The present invention relates to a modular carbon fibre composite beam structure to be used in web monitoring and/or defect detection of web-like products, for example in paper and cardboard machines.

Furthermore, the invention relates to a carbon fibre composite beam module to be used in a beam structure.

### Background of the invention

In paper and cardboard machines, a web-like material running through the machine, such as paper or cardboard, is continuously formed. In paper machines, the web must be controlled in order to detect possible defects in the paper or cardboard web and to obtain a final product of high quality. In normal web monitoring, a light source is provided on one side of the web and a camera on the other side, each device having the size of approximately a package of coffee and being fixed to beams extending above and below the web. In connection with paper and cardboard machines, various beams and beam structures are used for supporting these web monitoring means.

Present paper webs have a width up to 12 metres, so that the beams or rails used in web monitoring must have at least this length to extend over the whole web. It is exactly the length of the beams that imposes the greatest challenges on the beam to be used in web monitoring, because beams with a length of even more than 12 metres require special arrangements in connection with their manufacture, storage, transportation and other handling. Furthermore, the beams must be made to the correct length according to the application, and if the structures are damaged, they must be totally replaced. At present, the web monitoring beams are typically made of, for example, aluminium, carbon fibre or steel.

Instead of web monitoring beams, another alternative is to use web monitoring rails, but the use of rails also involves problems, such as deficient protection of the cameras and the lights, and entry of dust in them.

Corresponding to the features of the preamble of claims 1 and 9,

DE 102005049525A1 discloses a cross-directional beam structure of a paper, board or finishing machine, wherein the beam is preferably made of a composite material and supported at the middle. The beam has an inner and outer shell which are situated inside each other and which are supported to each other over some of their length, and that one shell is supported stationarily by its ends to the frame structures of the said machine, and that one shell deflects when the beam is loaded while the other shell remains essentially straight.

DE 19951041A1 discloses a beam structure made of a composite for a pulp, paper or board machine or for a paper or board finishing device. The beam is formed of one curved part and one straight part joined thereto, to which the straight part a doctoring, coating or measurement apparatus is attached.

DE 4141133C1 disclose a support beam for the doctor blade bearing on a dry cylinder comprising an elongated hollow body of a composite fibre material, pref. C or graphite fibres, wherein the main fibre orientation is in the longitudinal direction. The beam has at least two convex curved longitudinal walls that are connected by convex transition zones.

### Brief summary of the invention

It is an aim of the present invention to provide a solution to overcome the drawbacks of the above-mentioned beam structures and to present a novel beam structure. The beam structure according to the invention is characterized in what will be presented in independent claim 1. The beam structure is formed of at least two carbon fibre composite beam modules with a monolithic profile, having an installation opening, for example for a sensor, such as a camera, or a radiation source, such as an illuminator, on a longitudinal side, and which beam modules are configured to be fastened one after the other in the longitudinal direction by fastening elements, wherein each beam module constitutes a part of the uniform beam structure. The invention also relates to a beam module which is characterized in what will be presented in independent claim 9. The module is made of carbon fibre composite material, and it is used in the beam structure with at least another beam module, fastened one after the other in the longitudinal direction by fastening elements, and one longitudinal side of the beam module comprising an installation opening for at least one functional element, for example a sensor, such as a camera, or a radiation source, such as an illuminator.

The invention provides significant advantages to prior art. Carbon fibre composite beams are lighter in weight and easier to handle, because the masses of beams of carbon fibre are small compared with the masses of metal beams. Furthermore, carbon fibre composite is more rigid in relation to its mass than steel, which is an advantageous property in long beam structures, to avoid bending of the beam. It is easier to transport beam modules than a long beam, because modules can be transported by smaller means of transportation, and their storage does not require a long storage space, but the storage is possible in considerably smaller spaces. The box-like profile according to the invention is also relatively enclosed, and it is substantially fully enclosed by cover plates installed in spaces free of functional elements in the installation opening, so that it is possible to prevent, among other things, the entry of dust and moisture into these devices.

A particular advantage is the fact that the beam according to the invention can be easily made shorter or longer, if necessary, by removing, adding or replacing modules, wherein the same beam can be applied in different machines and for different web widths. Another advantage is achieved by the fact that a single beam module of the beam structure can be replaced, if necessary, for example if the beam module is broken or if the beam structure is re-used in another object of web monitoring. In these cases, it is not necessary to replace the whole beam structure but, for example, a single module.

Furthermore, one should particularly note that the beam modules used in the beam structure must be suitable for the purpose and have a sufficiently light weight. A beam structure that is composed of, for example, aluminium beam modules is advantageously not suitable for use in web monitoring, because aluminium modules, due their greater mass, will require a considerably stronger support structure in the joints. Because of the higher weight of aluminium than carbon composite, the joints of the modules will not be sufficiently strong, but the structure may, for example, bend at such joints. Box-like carbon fibre composite beam modules can be made, for example, by extrusion to have a monolithic profile, contrary to box beams made of metal which have an at least two-piece profile, that is, they consist of at least two parts. Thanks to the excellent corrosion resistance, fatigue resistance, high specific frequency and good vibration damping and heat insulation properties of the composites, structures are possible which give substantially better performance values than metals. Carbon fibre composites maintain their rigidity and strength well, and they have a particularly small elongation under stress.

### Description of the drawings

In the following, the invention will be described in more detail with reference to the appended drawings, in which
- Fig. 1: shows a carbon fibre composite beam module according to an embodiment of the invention, and
- Fig. 2: shows a carbon fibre composite beam module according to an embodiment of the invention in a cross-sectional profile, and
- Fig. 3: shows a fastening method according to an embodiment of the invention, for installing beam modules one after the other in the longitudinal direction to form a beam structure, and
- Fig. 4: shows an embodiment of the invention, in which two beam modules have been combined to form a beam structure that comprises functional elements, and
- Fig. 5: shows an embodiment of the invention for installing beam modules to form a beam structure.

### Detailed description of the invention

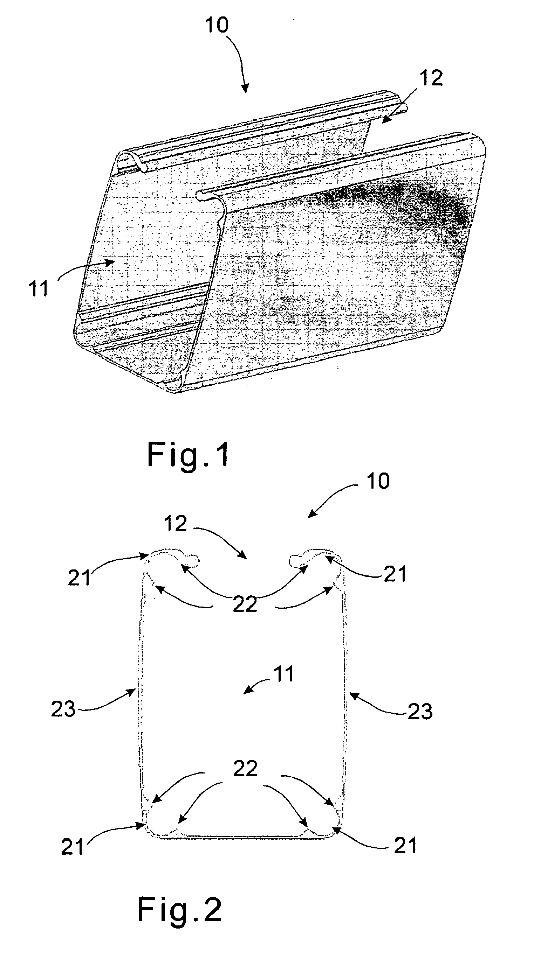

In the following, the invention will be described in more detail by using, as an example, a beam module of carbon fibre composite according to the embodiment shown in Fig. 1. Figure 1 shows the frame 10 of a beam module, having a monolithic and constant cross-sectional profile over the whole length of the frame 10. One longitudinal side of the frame 10 of the beam module is provided with an opening 12 preferably at the stage when the frame is made by extrusion. On the other hand, it can be stated that the opening 12 can be formed in connection with the manufacture of the frame without making the opening 12 separately in the beam frame 10. This opening 12 can be used as an installation opening for at least one functional element suitable for web monitoring, for example a camera or an illuminator. Furthermore, since the frame 10 of the beam module is box-like and hollow inside, that is, a duct 11 is formed inside the frame 10, at least one functional element can be installed from the installation opening 12 into the duct 11 and directed through the installation opening 12 towards the web.

Figure 2 shows the cross-section of a frame 10 of a carbon fibre composite beam module according to an embodiment. At least two edges 21 of the frame have a curved cross-sectional profile, and in connection with the edges 21, inside the frame 10, walls or supports 22 are provided, extending towards the centre of the duct 11, to provide the edges of the frame 10 with sufficiently large fastening surface areas for the fastening elements for installing the beam modules one after the other. The sides 23 of the frame 10, extending in a direction perpendicular to the installation opening 12, may preferably be slightly curved, because with a curved shape, the structure maintains its shape better.

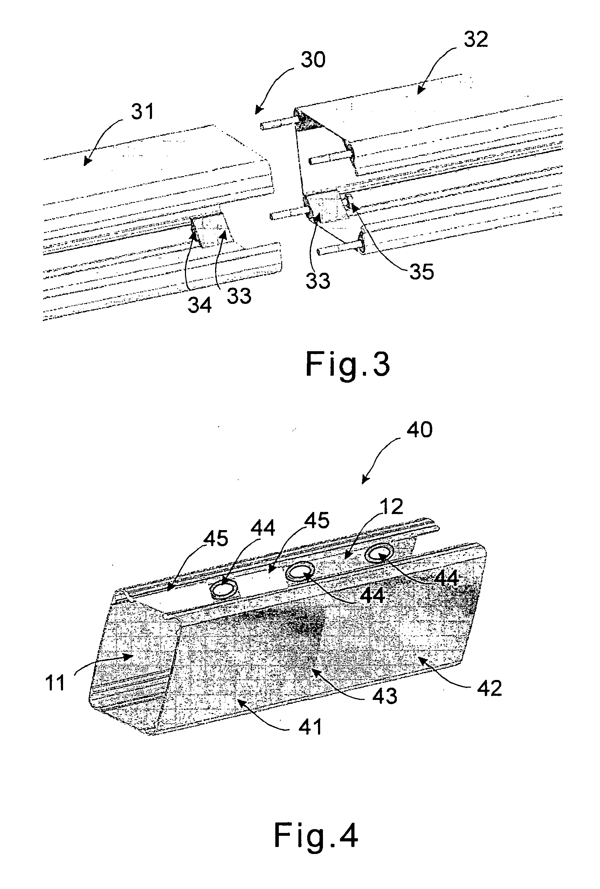

Figure 3 shows the joint 30 of two carbon fibre composite beam modules according to an embodiment. The beam module frames 31 and 32 are installed one after the other in the longitudinal direction and are fixed to each other at the edges. In the joint 30, the edges of the frames 31 and 32 can be provided, for example by gluing, with fastening elements 33 made in the rounded edges of the beam module frames 31 and 32 and inside the frames 31 and 32, to be attached to supports formed on each edge to increase the fastening surface. The fastening elements 33 comprise a cavity 34 extending through the fastening element and in the direction of the joint 30 when fixed to the frame. When forming the joint 30, the fastening elements 33 of the frame 32 are placed against the fastening elements on the corresponding edge of the other frame 31 so that the cavities 34 of the fastening elements 33 of both frames are abutting and so that the installation openings of the beam module frames 31 and 32 are aligned in the beam structure to be formed. When fixing the joint of the beam structure, the abutting cavities 34 of the beam module frames 31 and 32 are interlocked by a connecting element 35 to be installed inside the cavities 34. The connecting element 35 may be a pin-like element, such as a bolt, whose one end is provided with a head larger than the diameter of the cavity 34 of the fastening element 33, so that the connecting element 35 does not protrude through the whole cavity 34 of the fastening element 33 installed in the frame 32 but only to the head of the connecting element 35. The end opposite to the head of the connecting element 35 is installed through the whole cavity 34 of the fastening element 33 fastened in the corresponding location in the frame 31, and is fastened in its place at the other end of the cavity 34, for example with a nut or the like. The fastening elements 33 can be made of, for example, glass fibre composite, and the connecting element of, for example, steel.

The carbon fibre composite structure 40 according to an embodiment of Fig. 4 is two-piece, that is, it consists of two modules 41 and 42. The modules 41 and 42 of the structure 40 are fastened to each other by the method shown in Fig. 3. Such fastening elements placed at the edges enable a box-like and uniform structure for the whole beam structure 40, also at the joint 43; as a result, cameras 44 can be placed over the whole length of the beam structure 40, also at the joint 43. On top of the installation opening, in those spaces of the beam structure 40 which are free of cameras 44, it is advantageous to place a cover plate 45, for example between the cameras 44, to prevent the entry of dust, dirt and moisture to the inside of the structure 40 and to the cameras 44 or cables in the structure. Furthermore, the cover plates 45 protect the cameras 44 from possible dents. The cover plates 45 are advantageously designed so that they fit in the installation opening 12 so that only the necessary part of the camera 44, for example the objective, is visible from the installation opening 12, and the cover plates 45 enclose the rest of the installation opening 12. After the installation, it is possible to change the location of both the cameras 44 and the cover plates 45, if necessary. Also, the ends of the structure 40 are advantageously closed with cover plates or the like, to protect the equipment inside the structure 40 but enabling, for example, the passage of cables through the ends of the structure.

A protective film can be installed in front of the cameras 44 in the installation opening 12, preventing the objectives of the cameras 44 from becoming dusty and being easier to clean and replace than the objectives of the cameras. Furthermore, the protective film protects the objectives of the cameras from, for example, dents.

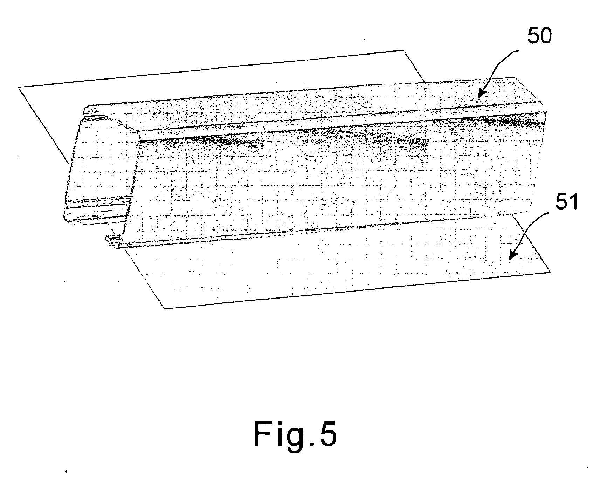

Figure 5 shows a beam structure 50 according to an embodiment, consisting of three carbon fibre composite modules and placed on top of a web 51 so that the installation opening and the functional elements in the installation opening are facing the web. In view of strength, the beam structure is preferably formed so that there is no module joint at the centre of the beam structure, so that the load of forces is divided more evenly and is not exerted at its strongest to a joint.

Normally, the beam structure to be placed on top of the web comprises cameras, and correspondingly, a structure placed below the web and directed to the web from below comprises illuminators which illuminate the web from below so that the cameras placed above the web can image the illuminated web to detect defects in the web. However, it is possible that for example the structure placed on top of or below the web comprises both illuminators and cameras, wherein the light from the illuminators is reflected from the web and makes it possible to detect defects in the web by the cameras. Furthermore, in addition to web monitoring, the beam structure can also be used, for example, for detecting defects in the web and for quality control, defect detection or path monitoring of the paper web running below or above the beam structure, as well as in quality control systems (QSC).

Moreover, it is possible to make the fastening surfaces for the fastening elements at the edges inside the frame, for example, angular or oval.

The present invention is not limited to the above-presented embodiment, but it can be modified within the scope of the appended claims.

## Claims

1. A carbon fibre composite beam structure (40) with a monolithic profile, comprising at least one side comprising an installation opening (12) for at least one functional element, wherein the beam structure (40) is configured to be placed in the vicinity of a web (51) transversely to said web and to support at least one functional element used for web monitoring, **characterized in that** the beam structure (40) comprises at least two carbon fibre composite beam modules (10) with a monolithic profile, and which beam modules (10) are configured to be fastened one after the other in the longitudinal direction by fastening elements (33), wherein each beam module is configured to constitute a part of the uniform beam structure (40).

2. The beam structure according to claim 1, **characterized in that** the beam structure (40) can be placed above or below the web (51) so that the installation opening (12) of the beam structure (40) is on the side closest to the web (51).

3. The beam structure according to any of the claims 1 or 2, **characterized in that** the functional element is a sensor comprising an objective, such as a camera (44), which is placed in connection with the installation opening (12) of the beam module (10) so that the objective of the sensor (44) is directed away from the beam structure (40).

4. The beam structure according to any of the claims 1 to 3, **characterized in that** the functional element is a radiation source, such as an illuminator, which is installed inside the beam structure (40) so that the light from the radiation source is directed away from the beam structure (40).

5. The beam structure according to any of the claims 1 to 4, **characterized in that** the beam module (10) comprises at least two edges with a curved cross-sectional profile, and that a support (22) is provided in connection with each edge (21) inside the beam modules (10), for increasing the fastening surface of the fastening elements (33) needed for fastening the beam modules (10) one after the other.

6. The beam structure according to any of the claims 1 to 5, **characterized in that** the fastening elements (33) to be fastened to the frame of the beam modules (10) comprise a cavity (34), and the abutting cavities (34) of the beam modules (10) can be interlocked by a connecting element (35) when forming the joint of the beam structure.

7. The beam structure according to any of the claims 1 to 6, **characterized in that** the fastening elements (33) are fastened to the beams by gluing.

8. The beam structure according to any of the claims 1 to 7, **characterized in that** at least two sides (23) of the beam module (10) have a curved cross-sectional profile.

9. A beam module (10) having a monolithic profile and made of carbon fibre composite material, wherein one longitudinal side of the beam module (10) comprises an installation opening (12) for at least one functional element, **characterized in that** the beam module (10) is fitted to be used in a beam structure (40), which beam structure (40) is configured to be formed of at least two beam modules (10) to be fastened one after the other in the longitudinal direction by fastening elements (33).

10. The beam module according to claim 9, **characterized in that** the installation opening (12) is uniform and extends over the whole beam module (10).

11. The beam module according to claim 9 or 10, **characterized in that** the functional element to be installed in connection with the installation opening (12) of the beam module (10) is a sensor, such as a camera (44), or a radiation source, such as an illuminator, and the functional element can be installed in any location of the installation opening (12) of the beam module (10), and the location of the functional element can be changed.

12. The beam module according to any of the claims 9 to 11, **characterized in that** at least one cover plate (45) can be fitted in the installation opening (12) of the beam module(10), and the location of the cover plate (45) can be changed.

13. The beam module according to claim 12, **characterized in that** the beam module (10) comprises at least two edges with a curved cross-sectional profile, and that a support (22) is provided in connection with each edge (21) inside the beam modules (10), for increasing the fastening surface of the fastening elements (33) used for fastening the beam modules (10) one after the other.

14. The beam module according to any of the claims 9 to 13, **characterized in that** at least two sides (23) of the beam module (10) have a curved cross-sectional profile.

15. The beam module according to any of the claims 9 to 14, **characterized in that** the beam module (10) is made by extrusion.

## Patentansprüche

1. Kohlefaserverbundwerkstoff-Balkenstruktur (40) mit einem monolithischen Profil, aufweisend mindestens eine Seite, die eine Einbauöffnung (12) für mindestens ein Funktionselement aufweist, wobei die Balkenstruktur (40) so konfiguriert ist, dass sie in der Nähe einer Bahn (51) quer zu dieser Bahn angeordnet wird und mindestens ein Funktionselement trägt, das zur Bahnüberwachung dient, **dadurch gekennzeichnet, dass** die Balkenstruktur (40) mindestens zwei Kohlefaserverbundwerkstoff-Balkenmodule (10) mit einem monolithischen Profil aufweist, und wobei die Balkenmodule (10) so konfiguriert sind, dass sie in Längsrichtung nacheinander durch Befestigungselemente (33) befestigt werden, wobei jedes Balkenmodul so konfiguriert ist, dass es einen Teil der einheitlichen Balkenstruktur (40) bildet.

2. Balkenstruktur nach Anspruch 1, **dadurch gekennzeichnet, dass** die Balkenstruktur (40) über oder unter der Bahn (51) angeordnet werden kann, so dass sich die Einbauöffnung (12) der Balkenstruktur (40) auf der der Bahn (51) am nächsten gelegenen Seite befindet.

3. Balkenstruktur nach einem der Ansprüche 1 oder 2, **dadurch gekennzeichnet, dass** das Funktionselement ein Sensor ist, der ein Objektiv, wie eine Kamera (44), aufweist, die in Verbindung mit der Einbauöffnung (12) des Balkenmoduls (10) so angeordnet wird, dass das Objektiv des Sensors (44) von der Balkenstruktur (40) weg gerichtet ist.

4. Balkenstruktur nach einem der Ansprüche 1 bis 3, **dadurch gekennzeichnet, dass** das Funktionselement eine Strahlungsquelle ist, wie ein Illuminator, die innerhalb der Balkenstruktur (40) so eingebaut wird, dass das Licht von der Strahlungsquelle von der Balkenstruktur (40) weg gerichtet ist.

5. Balkenstruktur nach einem der Ansprüche 1 bis 4, **dadurch gekennzeichnet, dass** das Balkenmodul (10) mindestens zwei Kanten mit einem gekrümmten Querschnittprofil aufweist und dass ein Halter (22) in Verbindung mit jeder Kante (21) innerhalb der Balkenmodule (10) vorgesehen ist, um die Befestigungsfläche der Befestigungselemente (33), die zur Befestigung der Balkenmodule (10) nacheinander benötigt werden, zu vergrößern.

6. Balkenstruktur nach einem der Ansprüche 1 bis 5, **dadurch gekennzeichnet, dass** die an dem Rahmen der Balkenmodule (10) zu befestigenden Befestigungselemente (33) einen Hohlraum (34) aufweisen und die anliegenden Hohlräume (34) der Balkenmodule (10) bei Bildung der Verbindungsstelle der Balkenstruktur durch ein Verbindungselement (35) verblockt werden können.

7. Balkenstruktur nach einem der Ansprüche 1 bis 6, **dadurch gekennzeichnet, dass** die Befestigungselemente (33) durch Kleben an den Balken befestigt werden.

8. Balkenstruktur nach einem der Ansprüche 1 bis 7, **dadurch gekennzeichnet, dass** mindestens zwei Seiten (23) des Balkenmoduls (10) ein gekrümmtes Querschnittprofil aufweisen.

9. Balkenmodul (10) mit einem monolithischen Profil, das aus einem Kohlefaserverbundwerkstoff gefertigt ist, wobei eine Längsseite des Balkenmoduls (10) eine Einbauöffnung (12) für mindestens ein Funktionselement aufweist, **dadurch gekennzeichnet, dass** das Balkenmodul (10) so eingepasst ist, dass es in einer Balkenstruktur (40) verwendbar ist, wobei die Balkenstruktur (40) so konfiguriert ist, dass sie aus mindestens zwei Balkenmodulen (10) gebildet wird, die durch Befestigungselemente (33) nacheinander in Längsrichtung zu befestigen sind.

10. Balkenmodul nach Anspruch 9, **dadurch gekennzeichnet, dass** die Einbauöffnung (12) einheitlich ist und sich über das gesamte Balkenmodul (10) erstreckt.

11. Balkenmodul nach Anspruch 9 oder 10, **dadurch gekennzeichnet, dass** das in Verbindung mit der Einbauöffnung (12) des Balkenmoduls (10) einzubauende Funktionselement ein Sensor, wie eine Kamera (44), oder eine Strahlungsquelle, wie ein Illuminator, ist und das Funktionselement an jeder Stelle der Einbauöffnung (12) des Balkenmoduls (10) eingebaut und die Position des Funktionselements verändert werden kann.

12. Balkenmodul nach einem der Ansprüche 9 bis 11, **dadurch gekennzeichnet, dass** mindestens eine Abdeckplatte (45) in die Einbauöffnung (12) des Balkenmoduls (10) eingepasst und die Position der Abdeckplatte (45) verändert werden kann.

13. Balkenmodul nach Anspruch 12, **dadurch gekennzeichnet, dass** das Balkenmodul (10) mindestens zwei Kanten mit einem gekrümmten Querschnittprofil aufweist und dass ein Träger (22) in Verbindung mit jeder Kante (21) innerhalb der Balkenmodule (10) vorgesehen ist, um die Befestigungsfläche der Befestigungselemente (33), die zur Befestigung der Balkenmodule (10) nacheinander benötigt werden, zu vergrößern.

14. Balkenstruktur nach einem der Ansprüche 9 bis 13, **dadurch gekennzeichnet, dass** mindestens zwei Seiten (23) des Balkenmoduls (10) ein gekrümmtes Querschnittprofil aufweisen.

15. Balkenmodul nach einem der Ansprüche 9 bis 14, **dadurch gekennzeichnet, dass** das Balkenmodul (10) durch Extrusion gefertigt ist.

## Revendications

1. Structure de poutre (40) en composite à base de fibres de carbone avec un profil monolithe, comprenant au moins un côté comprenant une ouverture d'installation (12) pour au moins un élément fonctionnel, dans laquelle la structure de poutre (40) est configurée pour être placée à proximité d'un lé (51) transversalement audit lé et pour supporter au moins un élément fonctionnel utilisé pour une surveillance du lé, **caractérisée en ce que** la structure de poutre (40) comprend au moins deux modules de poutre (10) en composite à base de fibres de carbone avec un profil monolithe, et lesquels modules de poutre (10) sont configurés pour être fixés l'un après l'autre dans le sens longitudinal par des éléments de fixation (33), dans laquelle chaque module de poutre est configuré pour constituer une partie de la structure de poutre (40) uniforme.

2. Structure de poutre selon la revendication 1, **caractérisée en ce que** la structure de poutre (40) peut être placée au-dessus ou en-dessous du lé (51) de façon à ce que l'ouverture d'installation (12) de la structure de poutre (40) soit sur le côté le plus proche du lé (51).

3. Structure de poutre selon l'une quelconque des revendications 1 ou 2, **caractérisée en ce que** l'élément fonctionnel est un capteur comprenant un objectif, tel qu'une caméra (44), qui est placé en connexion avec l'ouverture d'installation (12) du module de poutre (10) de façon à ce que l'objectif du capteur (44) soit dirigé à l'opposé de la structure de poutre (40).

4. Structure de poutre selon l'une quelconque des revendications 1 à 3, **caractérisée en ce que** l'élément fonctionnel est une source de rayonnement, telle qu'un illuminateur, qui est installée à l'intérieur de la structure de poutre (40) de façon à ce que la lumière provenant de la source de rayonnement soit dirigée à l'opposé de la structure de poutre (40).

5. Structure de poutre selon l'une quelconque des revendications 1 à 4, **caractérisée en ce que** le module de poutre (10) comprend au moins deux bords avec un profil en coupe transversale incurvé, et qu'un support (22) est prévu en connexion avec chaque bord (21) à l'intérieur des modules de poutre (10), pour augmenter la surface de fixation des éléments de fixation (33) nécessaires pour fixer les modules de poutre (10) l'un après l'autre.

6. Structure de poutre selon l'une quelconque des revendications 1 à 5, **caractérisée en ce que** les éléments de fixation (33) destinés à être fixés au cadre des modules de poutre (10) comprennent une cavité (34), et les cavités (34) en butée des modules de poutre (10) peuvent être interverrouillées par un élément de connexion (35) lors de la formation de la jonction de la structure de poutre.

7. Structure de poutre selon l'une quelconque des revendications 1 à 6, **caractérisée en ce que** les éléments de fixation (33) sont fixés aux poutres par collage.

8. Structure de poutre selon l'une quelconque des revendications 1 à 7, **caractérisée en ce qu'**au moins deux côtés (23) du module de poutre (10) ont un profil en coupe transversale incurvé.

9. Module de poutre (10) ayant un profil monolithe et constitué d'un matériau composite à base de fibres de carbone, dans lequel un côté longitudinal du module de poutre (10) comprend une ouverture d'installation (12) pour au moins un élément fonctionnel, **caractérisé en ce que** le module de poutre (10) est constitué pour être utilisé dans une structure de poutre (40), laquelle structure de poutre (40) est configurée pour être formée d'au moins deux modules de poutre (10) destinés à être fixés l'un après l'autre dans le sens longitudinal par des éléments de fixation (33).

10. Module de poutre selon la revendication 9, **caractérisé en ce que** l'ouverture d'installation (12) est uniforme et s'étend sur la totalité du module de poutre (10).

11. Module de poutre selon la revendication 9 ou 10, **caractérisé en ce que** l'élément fonctionnel destiné à être installé en connexion avec l'ouverture d'installation (12) du module de poutre (10) est un capteur, tel qu'une caméra (44), ou une source de rayonnement, telle qu'un illuminateur, et l'élément fonctionnel peut être installé en un quelconque emplacement de l'ouverture d'installation (12) du module de poutre (10), et l'emplacement de l'élément fonctionnel peut être changé.

12. Module de poutre selon l'une quelconque des revendications 9 à 11, **caractérisé en ce qu'**au moins une plaque de recouvrement (45) peut être disposée dans l'ouverture d'installation (12) du module de poutre (10), et l'emplacement de la plaque de recouvrement (45) peut être changé.

13. Module de poutre selon la revendication 12, **caractérisé en ce que** le module de poutre (10) comprend au moins deux bords avec un profil en coupe transversale incurvé, et qu'un support (22) est prévu en connexion avec chaque bord (21) à l'intérieur des modules de poutre (10), pour augmenter la surface de fixation des éléments de fixation (33) utilisés pour fixer les modules de poutre (10) l'un après l'autre.

14. Module de poutre selon l'une quelconque des revendications 9 à 13, **caractérisé en ce qu'**au moins deux côtés (23) du module de poutre (10) ont un profil en coupe transversale incurvé.

15. Module de poutre selon l'une quelconque des revendications 9 à 14, **caractérisé en ce que** le module de poutre (10) est réalisé par extrusion.
